# FASCICULE DE BREVET EUROPEEN

(11) **EP 0 940 962 B1**
(45) Date de publication et mention de la délivrance du brevet: **30.08.2006**
(21) Numéro de dépôt: 99200522.3
(22) Date de dépôt: 24.02.1999
(51) Int. Cl.: H04M 1/02

(54) **Appareil électronique à clavier variable**
Elektronisches Gerät mit veränderlicher Tastatur
Electronic apparatus with variable keyboard

(30) Priorité: 03.03.1998 FR 9802544
(43) Date de publication de la demande: 08.09.1999
(73) Titulaire: Koninklijke Philips Electronics N.V., 5621 BA Eindhoven (NL)
(72) Inventeur: Lefort, Loic, 75008 Paris (FR)
(74) Mandataire: van Oudheusden-Perset, Laure E.

(56) Documents cités:
- EP-A- 0 661 824
- GB-A- 2 289 595
- US-A- 5 363 089
- US-A- 5 661 641
- "PERSONAL COMMUNICATOR CONFIGURATIONS" IBM TECHNICAL DISCLOSURE BULLETIN, vol. 37, no. 6A, 1 juin 1994, pages 449-453, XP000455841

## Description

La présente invention concerne un appareil électronique possédant une face principale munie de moyens de liaison avec un utilisateur, tels qu'un clavier de touches et un afficheur.

Des appareils électroniques mobiles portables peuvent tenir dans la main, tels des calculatrices, des récepteurs d'appel, des organiseurs et autres appareils de calcul ou de communication comme des téléphones mobiles ou des téléphones sans fil. De tels appareils sont de plus en plus petits et légers et les fonctions et les services qu'ils procurent augmentent. Il devient ainsi possible d'associer plusieurs appareils. Cependant, la réduction de taille des téléphones mobiles d'aujourd'hui, notamment, est limitée par quelques composants qu'il n'est pas facile de réduire, tel que le clavier ou l'afficheur. Il est possible d'utiliser un appareil avec un clavier coulissant ou basculant mais, en position ouverte, les touches sur la partie coulissée ou basculée ne sont pas faciles à manipuler : la main tient seulement la partie principale et il n'y a pas d'appui ferme pour une pression sur telle ou telle touche sur le volet coulissé ou basculé qui supporte les touches du clavier.

On connaît notamment, de la demande de brevet EP-A-0 472 361 un poste de travail portable composé d'un ordinateur personnel et d'un téléphone mobile, dans une seule et même structure. Cet appareil comporte une partie de clavier pivotante qui permet de passer d'un clavier de téléphone mobile à un clavier d'ordinateur personnel, changement qui s'accompagne du passage d'un petit afficheur à un grand afficheur. Au cours de ce mouvement, cependant, le gabarit de l'appareil est notablement accru et les touches du clavier du téléphone mobile restent accessibles, non protégées, et peuvent être manoeuvrées par inadvertance.

Le document XP000455841 "Personnal Communicator configurations" de IBM décrit un appareil électronique comprenant un afficheur, un clavier mobile par rapport audit afficheur et destiné à être manoeuvré entre une première position et une deuxième position dans lesquelles ledit appareil électronique conserve la même largeur, ledit clavier masquant une partie dudit afficheur dans ladite deuxième position et découvrant ledit afficheur dans ladite première position. L'afficheur est un écran tactile.

Le brevet US5661641 décrit un appareil électronique (un téléphone portable) comprenant un afficheur, un clavier mobile et destiné à être manoeuvré entre une première position et une deuxième position dans lesquelles ledit appareil électronique conserve la même largeur.

Selon l'invention, les inconvénients de l'art antérieur sont atténués ou supprimés grâce au fait que l'appareil électronique indiqué au premier paragraphe est remarquable en ce qu'une première partie du clavier est fixe et qu'une deuxième partie, solidaire en permanence dudit appareil, comporte des moyens de positionnement pour être manoeuvrable entre deux positions opérationnelles pour lesquelles ledit appareil conserve un gabarit invariable, une première position selon laquelle ledit clavier est dit réduit et une deuxième position selon laquelle ledit clavier est dit étendu, et de façon telle que le passage de l'une à l'autre position rende accessibles audit utilisateur les touches du clavier pour la position d'arrivée et inaccessibles des touches du clavier pour la position de départ.

De cette façon, le passage d'un appareil électronique à un appareil d'une autre configuration mais de même gabarit, est complet et exclusif et un appui correct des touches de clavier est assuré pour l'une et l'autre configuration.

De préférence, dans la deuxième position avec clavier étendu, la partie manoeuvrable du clavier masque une partie dudit afficheur. Ainsi, le passage d'un clavier étendu à un clavier réduit s'accompagne d'un agrandissement de l'afficheur.

Un mode de réalisation préféré de l'invention est remarquable en ce que ladite partie manoeuvrable du clavier comporte des moyens de pivotement pour pouvoir être pivotée de l'une à l'autre position, autour d'une charnière disposée, sur ladite face principale, entre un bord de l'afficheur et un bord de la première partie fixe du clavier et en ce que cette partie manoeuvrable du clavier comporte une configuration de touches sur chacune de ses faces principales, ainsi que des moyens de connexion avec des éléments électroniques disposés à l'intérieur du boîtier de l'appareil.

Avantageusement, ces moyens de connexion sont constitués par une nappe de fils conducteurs qui traversent la face principale de l'appareil par une fente pratiquée au niveau de ladite charnière. Un appareil ainsi réalisé, selon l'invention, est bien adapté pour constituer un téléphone mobile dans sa première position de clavier étendu et un organiseur dans sa positon de clavier réduit, notamment. La combinaison d'un téléphone mobile avec un autre appareil, notamment un organiseur est intéressante, puisque par exemple l'organiseur permet d'enregistrer immédiatement des renseignements obtenus par téléphone.

La description qui suit en regard des dessins annexés, le tout donné à titre d'exemple non limitatif fera bien comprendre comment l'invention peut être réalisée.

La figure 1 représente en A vu de face et en B vu de profil un appareil selon l'invention dans sa deuxième position ; en C vu de face et en D vu de profil, le même appareil dans sa première position.

La figure 2 représente schématiquement en A vue de face et en B vue de profil la partie principale fixe de l'appareil de la figure 1 ; en C vue de face et en D vue de profil la deuxième partie manoeuvrable du clavier de l'appareil de la figure 1.

La figure 3 représente en A vu de profil et en B vu de face le détail de moyens d'immobilisation de la deuxième partie manoeuvrable du clavier ainsi que de moyens d'établissement d'un contact électrique.

La figure 4 montre de profil un mode de réalisation préféré de la deuxième partie manoeuvrable du clavier.

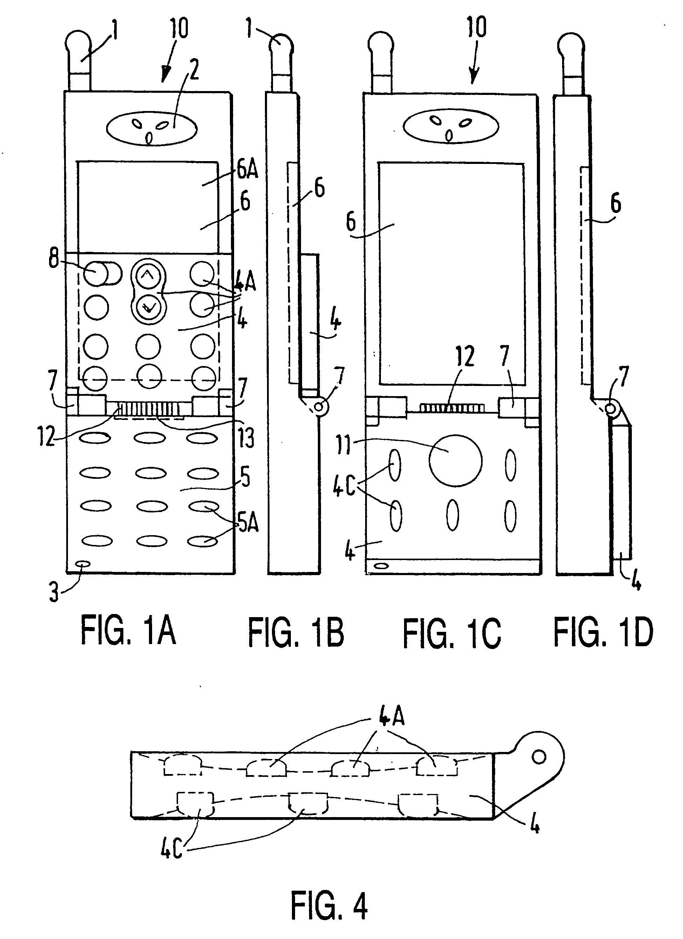

L'appareil représenté en 10 sur les figures 1A et 1C a l'apparence et les fonctionnalités d'un téléphone mobile classique. Sur une face principale, figure 1A, il comporte une antenne 1 et des moyens de liaison avec un utilisateur, tels qu'un écouteur 2, un microphone 3, un clavier de touches constitué en deux parties 4 et 5 et un afficheur 6 qui est de préférence un dispositif d'affichage à cristaux liquides, dit LCD. De façon connue, une première partie 5 du clavier qui est en l'occurrence la partie inférieure, est fixe et comporte de préférence, sous forme des touches 5A la partie réservée à la numérotation, soit les dix chiffres ainsi que les touches étoile et dièse. La deuxième partie 4 du clavier est mobile, selon l'invention. Dans le mode de réalisation de la figure 1 et telle que représentée aux figures 1A et 1B, la partie 4 a été manoeuvrée, par pivotement autour d'une charnière 7 de façon à occuper une position haute, dite deuxième position dans laquelle elle présente des touches 4A et qui permet d'obtenir un grand clavier, dit clavier étendu. Les gabarits des parties 4 et 5 du clavier sont sensiblement carrés et égaux. Ceci est nécessaire et tient au fait que dans sa première position représentée aux figures 1C et 1D, les touches 4A et 5A se trouvent situées en regard, presque au contact les unes des autres, étant ainsi rendues inaccessibles et protégées.

Pour une utilisation en téléphone mobile, le nombre de touches 4A peut être réduit à 6 environ, ce qui, ajouté aux 12 touches 5A constitue un nombre suffisant. On notera cependant que les touches 4A pourraient être portées au nombre de 12, comme pour les touches 5A, ce qui permet de transformer l'appareil des figures 1A et 1B en une calculatrice de poche, moyennant une programmation supplémentaire appropriée de l'appareil ainsi qu'une commutation électrique, par exemple au moyen d'une touche 8 apte à occuper deux positons latérales parmi les touches 4A, pour pouvoir passer du mobile à la calculatrice ou l'inverse, ces deux perfectionnements étant à la portée de l'homme du métier. On notera que, sur les figures 1A et 1B, le clavier mobile 4 masque la partie inférieure la plus grande de l'afficheur 6 dont la partie supérieure 6A, seule visible sur ces figures, est conçue, et elle seule, pour être inscriptible lors d'un fonctionnement en mobile ou en calculatrice de l'appareil. Si la miniaturisation de l'appareil est très poussée, le nombre des touches 5A ou 4A est réduit à 9 maximum et il devient difficile, sinon impossible de transformer l'appareil en calculatrice dans sa configuration des figures 1A et 1B.

Aux figures 1C et 1D, l'appareil décrit ci-dessus est représenté avec sa deuxième partie mobile 4 du clavier dans sa première position, c'est-à-dire dans sa position basse selon laquelle elle masque les touches 5A et présente des touches 4C dont le nombre est égal ou sensiblement égal à celui des touches 4A ou 5A. Il s'agit donc d'un clavier réduit en comparaison du clavier des figures 1A et 1B qui est dit étendu. Dans le mode de réalisation de la figure 1, le passage de la deuxième à la première position a été obtenu par pivotement de la partie 4 du clavier de 180 degrés autour de la charnière 7. On notera qu'à l'issue de cette manoeuvre, les touches 4A et 5A du clavier étendu, qui étaient seules accessibles sont toutes devenues inaccessibles et remplacées, au titre du clavier, par les touches 4C qui, dans le mode de réalisation de la figure 1A et 1B, sont inaccessibles, étant situées sur la face principale de la partie mobile 4, opposée à la face principale qui supporte les touches 4A. On notera aussi que la manoeuvre indiquée ci-dessus n'a pas altéré le gabarit de l'appareil. L'appareil des figures 1C et 1D peut être soit le même appareil que celui des figures 1A et 1B, essentiellement un téléphone mobile, avantageusement, soit un autre appareil, avantageusement un organiseur personnel. S'il s'agit d'un téléphone mobile, dans les deux configurations, aucune commutation électrique n'est nécessaire lors du passage de la configuration 1A à la configuration 1C. Dans ce cas, l'appareil qui a un clavier réduit et un afficheur notablement agrandi du fait qu'il n'y a plus de masquage du clavier par la partie mobile, peut être utilisé.avantageusement pour circuler dans le menu à des fins d'informations ou de modifications, un grand écran étant utile à cet effet et un clavier qui ne nécessite plus de touches pour les chiffres pouvant être réduit (un appel entrant demeure toujours possible lors de cette utilisation).

L'appareil des figures 1C et 1D peut aussi, avantageusement, être un organiseur personnel, le changement de fonctionnalités étant obtenu soit de façon automatique, par tout moyen connu, lors de la manoeuvre précitée pour la partie mobile 4, soit manuellement au moyen d'une touche 4C (non représentée) analogue à la touche 8 de la figure 1A. Cette dernière option est intéressante en ce qu'elle permet un fonctionnement soit en téléphone mobile, comme décrit ci-dessus, soit un organiseur dans sa configuration avec clavier réduit. Si l'appareil est un organiseur personnel, dans la configuration 1C, l'écran d'affichage 6 peut être muni de zones sensitives permettant à l'utilisateur d'introduire des informations en touchant l'écran, et les touches 4C peuvent comprendre un organe de pointage 11 du type boule roulante (ou trackball en anglais).

Pour réaliser la nécessaire liaison électrique entre la partie mobile 4 du clavier et un circuit imprimé (non représenté) à l'intérieur du boîtier de l'appareil 10, il est prévu des moyens de connexion qui, dans le mode de réalisation de la figure 1, sont constitués par une nappe de fils conducteurs 12, dite aussi limande, qui traverse la face principale de l'appareil par une fente 13 pratiquée au niveau de la charnière (voir figure 1).

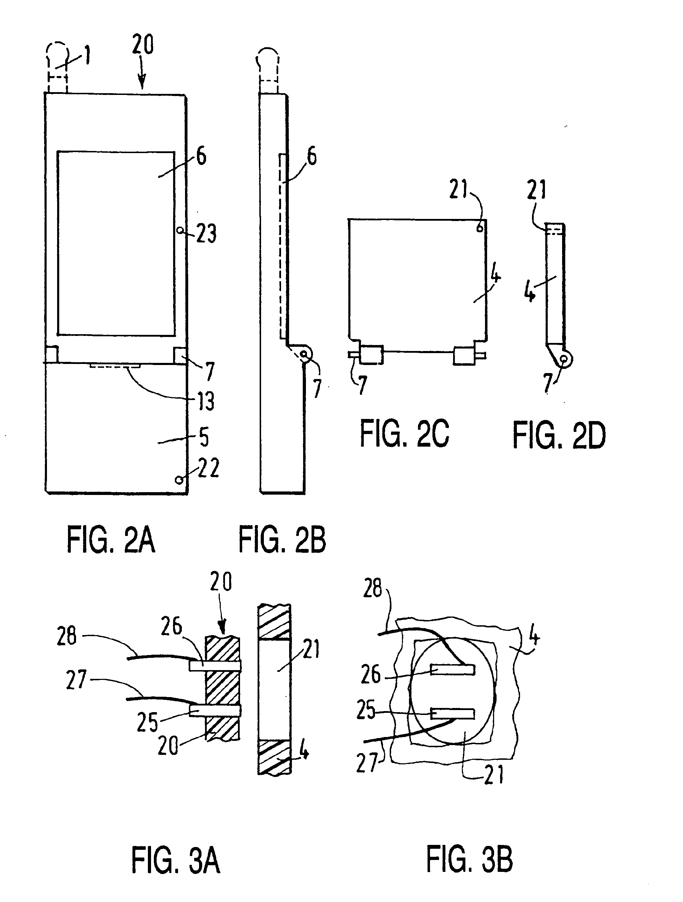

La figure 2 représente, en C et en D, la partie mobile du clavier 4 détachée du reste de l'appareil, référencé 20, ce qui permet de mieux apprécier la constitution de la charnière 7 qui relie ces deux éléments (les touches 4A, 5A et 4C n'ont pas été représentées pour ne pas surcharger les dessins). Sur la figure 2, on n'a pas représenté de microphone ni d'écouteur et l'antenne 1 est représentée en trait interrompu, tout ceci pour indiquer que l'appareil 20 pourrait ne pas être un téléphone mobile ni même un appareil de radiocommunication, mais un autre type d'appareil électronique tel qu'une calculatrice de poche, par exemple, dans sa configuration selon laquelle le clavier est dans sa deuxième position, étendue.

Le mode de réalisation de la figure 2 comporte des moyens d'immobilisation de la partie manoeuvrable 4 du clavier dans la première ou la deuxième position. Ces moyens consistent en un aimant 21 fixé à la partie 4 du clavier, et une pièce magnétique 22, respectivement 23, fixées en correspondance dans la face principale de l'appareil 20. Il est aussi possible de remplacer les pièces magnétiques 22 et 23 par des aimants et l'aimant 21 par une pièce magnétique correspondante.

Comme indiqué plus haut, l'établissement d'un contact électrique dans l'appareil peut être nécessaire lorsque le passage de l'une à l'autre position de la partie 4 du clavier s'accompagne d'une modification des fonctionnalités de l'appareil. L'établissement de ce contact pourrait être réalisé (de façon non représentée) au niveau de la charnière 7 en mettant à profit le mouvement de 180 degrés effectué lors du déplacement de la partie 4. Avantageusement, ce contact peut aussi être établi au niveau des moyens d'immobilisation 21, 22, 23 de la partie manoeuvrable 4 comme décrit ci-dessous en référence à la figure 3.

Sur la figure 3 est représentée une fraction de la partie 4 du clavier munie d'un aimant 21. En regard figure la pièce magnétique 22 ou 23 de l'appareil 20 qui se décompose en deux plots, 25 et 26, relié chacun à un conducteur électrique 27, 28 à l'intérieur de l'appareil. Lorsque l'aimant 21 arrive au contact des plots 25 et 26, il assure le verrouillage mécanique souhaité et il réalise en même temps la liaison électrique entre les conducteurs 27 et 28, ce qui induit, dans l'appareil 20 une polarisation ou le passage d'un courant électrique qui entraîne à son tour le changement du type de fonctionnement de l'appareil.

Lors de la mise en place de la partie mobile 4 du clavier dans sa première ou sa deuxième position, il faut veiller à ce que les touches 4A ou 4C n'entrent pas en contact avec des parties de la face principale de l'appareil 10 ou 20, c'est-à-dire avec l'écran 6 ou avec les touches 5A. A cet effet, un mode de réalisation avantageux de l'invention consiste à donner à chaque face de la partie 4 un galbe légèrement rentrant, comme représenté à la figure 4, et la même mesure peut être prise en ce qui concerne la partie 5 du clavier fixe ou l'écran d'affichage 6. Ainsi, quoique saillantes, les touches demeurent légèrement en retrait par rapport au périmètre des parties de clavier qui les supportent et les contacts de la face principale avec la partie 4 se font au niveau de ces périmètres ce qui procure à la fois un bon appui pour les touches utiles et une bonne protection pour les touches cachées, non accessibles.

## Revendications

1. Un appareil électronique (10) comprenant :
- un afficheur (6),
- un clavier (4) mobile par rapport audit afficheur (6) et destiné à être manoeuvré entre une première position et une deuxième position dans lesquelles ledit appareil électronique (10) conserve la même largeur, ledit clavier (4) masquant une partie dudit afficheur (6) dans ladite deuxième position et découvrant ledit afficheur (6) dans ladite première position.
**caractérisé en ce que** le clavier (4) comprend une première face munie de touches (4A) accessibles dans ladite deuxième position.

2. Un appareil électronique selon la revendication 1 où le clavier (4) comprend une deuxième face munie de touches (4C) accessibles dans ladite première position.

3. Un appareil électronique selon la revendication 1 ou 2 comprenant des touches fixes (5A) destinées à être masquées par ledit clavier (4) dans ladite première position et à être accessibles lorsque ledit clavier (4) est dans ladite deuxième position.

4. Un appareil électronique selon la revendication 1 comprenant :
- un système de détection pour générer un signal de détection indiquant ladite première position et ladite deuxième position,
- une première fonctionnalité et une deuxième fonctionnalité destinées à être commutée alternativement en réponse audit signal de détection.

5. Un appareil électronique selon la revendication 4 où ladite première fonctionnalité est une fonctionnalité de téléphone portable et où ladite deuxième fonctionnalité est une fonctionnalité d'organiseur.

6. Un appareil électronique selon la revendication 1, où l'appareil est un téléphone mobile.

7. Un appareil électronique selon la revendication 1, où l'appareil est un organiseur.

## Claims

1. An electronic device (10) comprising:
- a display (6)
- a keyboard (4) which is mobile with respect to said display (6) and intended to be moved between a first position and a second position in which said electronic device (10) retains the same size, said keyboard (4) masking part of said display (6) in said second position and uncovering said display (6) in said first position,
**characterized in that** the keyboard (4) has a first side with keys (4A) which are accessible in said second position.

2. An electronic device as claimed in claim 1, wherein the keyboard (4) has a second side with keys (4C) which are accessible in said first position.

3. An electronic device as claimed in claim 1 or 2, comprising fixed keys (5A) intended to be masked by said keyboard (4) in said first position and to be accessible when said keyboard (4) is in said second position.

4. An electronic device as claimed in claim 1, comprising:
- a detection system for generating a detection signal that indicates said first and second position,
- a first function and a second function intended to be switched alternately in response to said detection signal.

5. An electronic device as claimed in claim 4, wherein the first function is a function of portable telephone and said second function is a function of organizer.

6. An electronic device as claimed in claim 1, wherein the device is a mobile telephone.

7. An electronic device as claimed in claim 1, wherein the device is an organizer.

## Patentansprüche

1. Ein elektronisches Gerät (10) mit:
- einer Anzeige (6),
- einer mobilen Tastatur (4) in Bezug auf die besagte Anzeige (6), die dafür bestimmt ist, zwischen einer ersten Position und einer zweiten Position hin- und herbewegt zu werden, in denen das besagte elektronische Gerät (10) dieselbe Breite beibehält, wobei die besagte Tastatur (4) einen Teil der besagten Anzeige (6) in der besagten zweiten Position verdeckt und die besagte Anzeige (6) in der besagten ersten Position aufdeckt, **dadurch gekennzeichnet, dass** die Tastatur (4) eine erste mit Tasten (4A) versehene Seite enthält, die in der besagten zweiten Position zugänglich sind.

2. Elektronisches Gerät nach Anspruch 1, bei dem die Tastatur (4) eine zweite Seite enthält, versehen mit in der besagten ersten Position zugänglichen Tasten (4C).

3. Elektronisches Gerät nach Anspruch 1 oder 2 mit festen Tasten (5A), dafür bestimmt, in der besagten ersten Position von der besagten Tastatur (4) verdeckt zu werden und zugänglich zu sein, wenn die besagte Tastatur (4) in der besagten zweiten Position ist.

4. Elektronisches Gerät nach Anspruch 1 mit:
- einem Tastsystem für die Erzeugung eines Tastsignals zur Angabe der besagten ersten Position und der besagten zweiten Position,
- einer ersten Funktion und einer zweiten Funktion, dafür bestimmt, abwechselnd entsprechend dem besagten Tastsignal umgeschaltet zu werden.

5. Elektronisches Gerät nach Anspruch 4, in dem die besagte ersten Funktion eine Mobilofonfunktion und die besagte zweite Funktion eine Organizerfunktion ist.

6. Elektronisches Gerät nach Anspruch 1, wobei das Gerät ein Mobilofon ist.

7. Elektronisches Gerät nach Anspruch 1, wobei das Gerät ein Organizer ist.
